# EUROPÄISCHE PATENTSCHRIFT

(11) **EP 0 577 202 B1**
(45) Veröffentlichungstag und Bekanntmachung des Hinweises auf die Patenterteilung: **12.11.1997**
(21) Anmeldenummer: 93201837.7
(22) Anmeldetag: 25.06.1993
(51) Int. Cl.: H04N 11/04, H04N 9/44, H04N 5/76

(54) **Verfahren zur Datenübertragung**
Data transmission method
Procédé de transmission de données

(30) Priorität: 02.07.1992 DE 4221683
(43) Veröffentlichungstag der Anmeldung: 05.01.1994
(73) Patentinhaber: Philips Patentverwaltung GmbH, 22335 Hamburg (DE); Philips Electronics N.V., 5621 BA Eindhoven (NL)
(72) Erfinder: Gutsmann, Rolf-Dieter, c/o Philips Patentverwalt., D-20097 Hamburg (DE); Böhme, Siegfried, c/o Philips Patentverwaltung, D-20097 Hamburg (DE); Hackmann, Hartmut, c/o Philips Patentverwaltung, D-20097 Hamburg (DE); Warmuth, Leo, c/o Philips Patentverwaltung, D-20097 Hamburg (DE)
(74) Vertreter: von Laue, Hanns-Ulrich, Dipl.-Ing.

(56) Entgegenhaltungen:
- EP-A- 0 239 412
- US-A- 4 349 833
- US-A- 4 639 765
- US-A- 4 736 237
- US-A- 4 843 455
- FERNSEH UND KINO TECHNIK. Bd. 40, Nr. 3 , 30. März 1986 , BERLIN DE Seiten 105 - 111 MÖRING W. 'Konzepte der Taktverkopplung für den digitalen Fernsehempfänger'

## Beschreibung

Die Erfindung betrifft ein Verfahren zur Übertragung von Daten von einem digitalen Farbdekoder, welcher ein digitales Farb-Bildsignal dekodiert, zu einer anderen Signalverarbeitungseinheit sowie eine Anordnung zur Durchführung des Verfahrens.

In der Fernsehtechnik dienen Farbdekoder dazu, in einem Bildsignal in codierter Form vorliegende Farbinformationen zu dekodieren und zur weiteren Signalverarbeitung, insbesondere Bilddarstellung, zur Verfügung zu stellen. Als Ausgangssignale liefert ein derartiger Farbdekoder insbesondere die Bildsignal-Daten. Gegebenenfalls werden aber auch weitere Steuerdaten zu anderen Signalverarbeitungseinheiten übertragen.

Aus der EP-A-0 239 412 ist ein digitaler Farbdekoder bekannt, welcher zwei Phasenregelschleifen aufweist, von denen eine mit der Horizontal-Frequenz dem Dekoder zugeführten Farbbildsignals gekoppelt ist und von denen die andere mit dem Farb-Burst-Signal gekoppelt ist. Die Signale der Phasenregelschleifen werden ausschließlich innerhalb des digitalen Dekoders zur Dekodierung des Farbbildsignals eingesetzt.

Es ist Aufgabe der Erfindung, eine derartige Übertragung dahingehend weiterzuentwickeln, daß nachfolgende Signalverarbeitungseinheiten das dekodierte digitale Farb-Bildsignal leichter weiterverarbeiten können.

Diese Aufgabe ist erfindungsgemäß dadurch gelöst, daß wenigstens ein erstes und ein zweites Digitalsignal von dem Dekoder (1) zu der Signalverarbeitungseinheit (2), in welcher das von dem Dekoder gelieferte dekodierte Farbbildsignal weiterverarbeitet wird, in einem Signal seriell übertragen werden, daß es sich bei dem ersten Digitalsignal um ein Inkrement-Signal handelt, das in einer in dem Farb-Dekoder (1) vorgesehenen Horizontalfrequenz-Phasenregelschleife (5) einem digitalen steuerbaren Oszillator zugeführt wird, welche ein von der Horizontalfrequenz des digitalen Farb-Bildsignals abhängiges Taktsignal liefert, mit dem das digitale Farbbildsignal in dem Dekoder (1) verarbeitet wird, daß es sich bei dem zweiten übertragenen Digitalsignal um ein Farbträger-Inkrement-Signal handelt, das in einer in dem Farb-Dekoder (1) vorgesehenen Farbträger-Phasenregelschleife (6) einem digitalen steuerbaren Oszillator zugeführt wird, welche eine Farb-Hilfsträgerfrequenz liefert, die zur Farb-Dekodierung des digitalen Farbbildsignals eingesetzt wird, und daß die Daten in dem seriellen Signal für jedes der zu übertragenen Digitalsignale je Bildzeile des digitalen Farb-Bildsignals einmal übertragen werden.

Zur Weiterverarbeitung des von dem digitalen Farbdekoder dekodierten digitalen Bildsignals, d.h. also zur Weiterverarbeitung von dessen zeitdiskret vorliegenden Abtastwerten ist es insbesondere vorteilhaft, den Abtasttakt bzw. den Takt, mit dem dieses Signal weiterverarbeitet worden ist, vorliegen zu haben. Dies gilt insbesondere dann, wenn dieser Takt zeitlich schwankt, beispielsweise wenn das Bildsignal beispielsweise von einem Videorekorder stammt, der das Bildsignal mit schwankender Horizontalfrequenz liefert.

Die beiden Digitalsignale, die zu einem Signal zusammengefaßt von dem Dekoder zu einer nachfolgenden Signalverarbeitungseinheit nacheinander in einem Signal seriell übertragen werden, liefern die beiden wesentlichen Informationen über das Farbbildsignal, nämlich insbesondere dessen Taktfrequenz, bzw. die Taktfrequenz, mit der das Signal in dem Dekoder verarbeitet wird, und den Momentanwert der im Dekoder erzeugten Farb-Hilfsträgerfrequenz, mit der die Farbdekodierung im Dekoder stattfindet. Durch die Übertragung dieser beiden Daten zu nachfolgenden Signalverarbeitungseinheiten sind auch schwankende Werte dieser beiden Frequenzen der nachfolgenden Signalverarbeitungseinheit bekannt und können entsprechend berücksichtigt werden.

Bei der nachfolgenden Signalverarbeitungseinheit kann es sich beispielsweise um solche eines Fernsehgerätes handeln, das zur Darstellung des Bildsignals dient. In neuerer Zeit werden digitale Farbdekoder jedoch auch dazu eingesetzt, das dekodierte digitale Farb-Bildsignal an einen Rechner zu liefern, in dem es weiterverarbeitet werden kann oder zumindest teilweise bearbeitet werden kann. Das so bearbeitete Bildsignal wird dann wieder einem digitalen Enkoder zugeführt, der es wieder in einen Farb-Bildsignal der gewünschten Übertragungsnorm zurückwandelt. Diese Verarbeitung durch einen Rechner geschieht jedoch nur zeitweise, so daß während übriger Zeiten das von dem Farbdekoder gelieferte digitale Farb-Bildsignal unmittelbar dem Enkoder zugeführt und dort wieder codiert wird. Insbesondere während dieser Zeiten ist es für den Enkoder von großem Vorteil, die Informationen über die im Dekoder verwendete Taktfrequenz sowie die verwendete Farb-Hilfsträgerfrequenz vorliegen zu haben, da einerseits diese beiden Werte nicht im Enkoder neu erzeugt werden müssen und insbesondere da auf diese Weise auch schwankende Werte dieser beiden Frequenzen dem Enkoder bekannt sind, die dieser selbst kaum gewinnen könnte. Es kann auf diese Weise also eine sehr viel präzisere und vor allem störungsärmere Enkodierung des dekodierten digitalen Farb-Bildsignals im Enkoder stattfinden.

Insbesondere in dem Falle, daß die im Dekoder verwendete Taktfrequenz von der Horizontalfrequenz des digitalen Farb-Bildsignals abhängig ist, können in dem Bildsignal, wenn es von einem Videorekorder oder ähnlichen Geräten geliefert wird, Schwankungen der Horizontalfrequenz auftreten. Diese Schwankungen der Horizontalfrequenz haben entsprechende Schwankungen der Taktfrequenz zur Folge. Werden diese Schwankungen der Taktfrequenz beispielsweise einem nachgeschalteten Enkoder oder einem Ablenkprozessor nicht entsprechend mitgeteilt, so würden diese das Signal mit falscher Zeitbasis weiterverarbeiten, was sich unmittelbar in Bildstörungen niederschlägt. Durch die erfindungsgemäße Übertragung der entsprechenden Daten kann der Enkoder die schwankenden Takte voll übernehmen und das Bildsignal störungsfrei verarbeiten.

In digital arbeitenden Farbdekodern, die mit einer Taktfrequenz arbeiten, die abhängig von der Horizontalfrequenz des Bildsignals ist, ist im allgemeinen eine Horizontalfrequenz-Phasenregelschleife vorgesehen, die der Erzeugung des Taktsignals dient. Innerhalb dieser Phasenregelschleife ist ein steuerbarer Oszillator vorgesehen, dem einerseits eine feste Taktfrequenz und andererseits ein sogenanntes Inkrement-Signal zugeführt werden, welches unmittelbar abhängig ist von dem Momentanwert der Horizontalfrequenz des Bildsignals. Dieses Inkrementsignal kann vorteilhaft als erstes Digitalsignal zu einer Signalverarbeitungseinheit übertragen werden, da dieses Inkrementsignal unmittelbar abhängig ist von dem Wert der Taktfrequenz, die von der Horizontalfrequenz-Phasenregelschleife zur weiteren Signalverarbeitung im Dekoder erzeugt wird und da dieses Inkrement-Signal im Dekoder ohnehin vorliegt, also nicht extra für die Übertragung zu der Signalverarbeitungseinheit erzeugt werden muß. Die nachgeschaltete Signalverarbeitungseinheit kann anhand des Inkrement-Signals unmittelbar Rückschlüsse auf Schwankungen der Taktfrequenz ziehen, mit der das Bildsignal dekodiert oder verarbeitet wurde.

Für das zweite Digitalsignal gilt in entsprechender Form ähnliches, wie für das oben erläuterte erste Digitalsignal. Digitale Farb-Dekoder weisen im allgemeinen eine Farbträger-Phasenregelschleife auf, deren Farbträger-Inkrement-Signal als zweites Digitalsignal eingesetzt werden kann und unmittelbar ein Maß für den Momentanwert der Farb-Hilfsträgerfrequenz ist, mit der das Farb-Bildsignal im digitalen Farbdekoder dekodiert wird.

Eine weitere Ausgestaltung der Erfindung sieht vor, daß als drittes Digitalsignal die PAL- oder SECAM-Schaltphase übertragen wird. Bei Farb-Bildsignalen, die in der PAL- oder SECAM-Norm vorliegen, ist es außerdem von großem Vorteil, die zeilenweise alternierende Schaltphase zu kennen. Die dem Dekoder nachgeschaltete Signalverarbeitungseinheit kann dann vorteilhaft als drittes Digitalsignal diese Schaltphase mitgeteilt bekommen und bei der Farbenkodierung entsprechend berücksichtigen.

Eine weitere Ausgestaltung der Erfindung sieht vor, daß die Signalverarbeitungseinheit, die die übertragenen Digitalsignale empfängt, ein digitaler Farb-Enkoder ist, der das vom Dekoder gelieferte dekodierte Bildsignal wenigstens zeitweise wieder codiert.

Wie oben bereits erläutert, kann das erfindungsgemäße Verfahren insbesondere für einen als Signalverarbeitungseinheit vorgesehenen Enkoder vorteilhaft eingesetzt werden, da die erfindungsgemäß übertragenen Digitalsignale hier zu einer besonders deutlichen Verbesserung der Bildqualität des von dem Enkoder wieder encodierten Farb-Bildsignals beitragen. Dies gilt umso mehr, als die im Enkoder erforderlichen Digitalsignale im Dekoder ohnehin vorhanden sind und nur zum Enkoder übertragen werden müssen.

Gemäß einer weiteren Ausgestaltung der Erfindung ist vorgesehen, daß die Signalverarbeitungseinheit ein Ablenkprozessor eines Bild-Darstellungsgerätes ist.

In bekannten 100 Hz-Farbfernsehgeräten ist oftmals ein digitalarbeitender Farbdekoder vorgesehen, welcher mit einer Taktfrequenz arbeitet, die von der Horizontalfrequenz des Bildsignals abhängig ist. Bei Schwankungen der Horizontalfrequenz des Bildsignals kann der Ablenkprozessor Störungen der Darstellung des Bildsignals verursachen. Dies gilt insbesondere dann, wenn das Bildsignal von einem Videorekorder geliefert wird und am Anfang bzw. Ende eines jeden Teilbildes aufgrund der Wechsel der Videoköpfe des Rekorders sehr starke Schwankungen der Horizontalfrequenz auftreten. Infolge dieser Schwankungen der Horizontalfrequenz kann der Ablenkprozessor, der versucht, sich auf diese Schwankungen einzustellen, seinerseits zusätzliche Störungen verursachen, so daß am oberen oder unteren Bildrand zusätzliche Bildstörungen auftreten. Die erfindungsgemäße Übertragung wenigstens des ersten und zweiten Digitalsignals gestatten es dem Ablenkprozessor dagegen, die verwendeten Taktfrequenzen unmittelbar zu detektieren und auch Schwankungen in diesen Taktfrequenzen unmittelbar zu erkennen und entsprechend zu berücksichtigen. Eine Art Aufsynchronisierung auf die verwendeten Taktfrequenzen oder ein Abkoppeln ist dann nicht mehr erforderlich.

Die Werte des ersten und zweiten Digitalsignals liegen wie gesagt im Dekoder ohnehin vor und müssen nur zur Verarbeitung gegebenenfalls umgeformt werden. Beispielsweise liegen die oben erwähnten in den Phasenregelschleifen verwendeten Inkrement-Signale als parallele Werte vor. Sollen diese Inkrement-Signale als erstes und zweites Digitalsignal übertragen werden, so sind die Umsatzanordnungen vorzusehen, um die Signale zur Übertragung in serielle Form umzusetzen und gegebenenfalls in der Signalverarbeitungseinheit wieder in parallele Form zurückzuwandeln. Diese Umsetzanordnung können relativ einfach durch Schieberegister realisiert werden und können entweder in den Dekoder und die Signalverarbeitungseinheit integriert oder außerhalb dieser realisiert sein.

Gemäß einer weiteren Ausgestaltung der Erfindung nach Anspruch 7 ist für eine Anordnung zur Durchführung des Verfahrens vorgesehen, daß die in dem Dekoder in paralleler Form vorliegenden, zu übertragenden Digitalsignale einer Umsetzungsanordnung zugeführt werden, welche die Digitalsignale in serielle Form umsetzt, und daß eine weitere Umsetzungsanordnung vorgesehen ist, die die seriell empfangenen Daten in parallele Daten umsetzt, die der Signalverarbeitungseinheit zugeführt werden.

Anhand der Zeichnung wird nachfolgend ein Ausführungsbeispiel der Erfindung näher erläutert. Es zeigen:
Fig. 1 ein Blockschaltbild einer Anordnung mit einem digitalen Farbdekoder, zwei Umsetzungsanordnungen sowie einem digitalen Farb-Enkoder,
Fig. 2 ein Zeitdiagramm von zwischen den beiden in Fig. 1 dargestellten Umsetzungsanordnungen übertragenen Digitalsignalen.

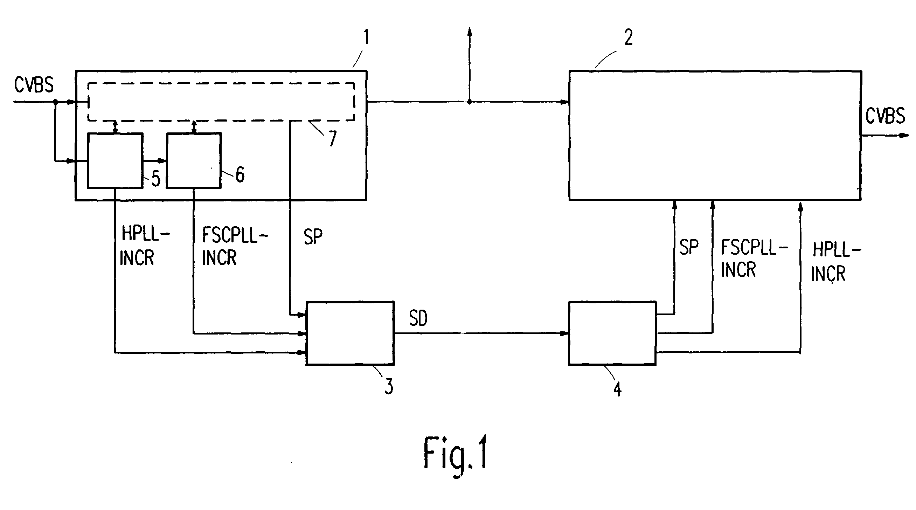

Ein Blockschaltbild gemäß Fig. 1 zeigt eine Anordnung, in welcher erfindungsgemäß wenigstens zwei Digitalsignale von einem in der Fig. schematisch angedeuteten digitalen Farbdekoder 1 zu einer anderen Signalverarbeitungseinheit, insbesondere einem in der Fig. 1 angedeuteten digitalen Farbenkoder 2 übertragen werden in einem Signal seriell übertragen werden.

Dazu ist eine erste Umsetzungsanordnung 3 vorgesehen, welche von dem digitalen Farbdekoder 1 gelieferte Signale von ihrer parallelen Form in ein Signal und in eine in serieller Form umsetzt. Ferner ist eine zweite Umsetzungsanordnung 4 vorgesehen, welche das ihr in serieller Form zugeführte Signal wieder in wenigstens das erste und das zweite Digitalsignal zerlegt und diese in die parallele Form überführt und dem digitalen Enkoder 2 zur Verfügung stellt.

Dem digitalen Farbdekoder 1 wird ein digitales Farb-Bildsignal zugeführt, das in der Fig. mit CVBS bezeichnet ist. In diesem Farb-Bildsignal liefert dieses Bildsignal Synchronsignale, welche die Vertikal-, d.h. also Teilbildfrequenz, bzw. die Horizontalfrequenz, d.h. also diejenige Frequenz, mit der die Bildzeilen wechseln, enthält. In dem digitalen Farbdekoder 1 werden zwei Taktsignale gewonnen, nämlich zum einen dasjenige Taktsignal, mit dem das Bildsignal in dem Farbdekoder und gegebenenfalls auch weitere nachgeschalteten Signalverarbeitungseinheiten weiterverarbeitet wird. Dieses Taktsignal kann dabei insbesondere von der Horizontalfrequenz des Bildsignals abhängig sein. Zur Gewinnung dieses Taktsignals ist innerhalb des Farbdekoders 1 eine Phasenregelschleife 5 vorgesehen, welche in der Fig. 1 nur schematisch angedeutet ist. Innerhalb dieser Phasenregelschleife 5 wird einem in dieser vorgesehenen steuerbaren Oszillator ein sogenanntes Inkrement-Signal zugeführt, das seinerseits wiederum unmittelbar abhängig ist von Schwankungen der Horizontalfrequenz des Bildsignals. Infolge der Abhängigkeit der Horizontalfrequenz und der erzeugten Taktfrequenz gibt dieses Signal auch die entsprechenden Schwankungen der Taktfrequenz an, mit der das Digitalsignal im Dekoder verarbeitet wird. Dieses Inkrement-Signal, das in der Fig. 1 mit HPLL-INCR bezeichnet ist, ist damit ummittelbar geeignet, als erstes Digitalsignal zur Übertragung an eine andere Signalverarbeitungseinheit.

In dem digitalen Farbdekoder 1 ist ferner eine weitere Phasenregelschleife 6 vorgesehen, welche dazu dient, die Farb-Hilfsträgerfrequenz zu erzeugen, mit der die Farb-Dekodierung im Dekoder 1 in einer in der Fig. 1 nur schematisch angedeuteten Dekodiereinheit 7 stattfindet. Die Phasenregelschleife 6 ist im Prinzip ähnlich aufgebaut wie die Phasenregelschleife 5; insbesondere ist einem in ihr vorgesehenen steuerbaren Oszillator ebenfalls ein Inkrementsignal zugeführt, das unmittelbar von dem Momentanwert der von der Phasenregelschleife erzeugten Farb-Hilfsträgerfrequenz abhängig ist. Dieses in der Fig. 1 als FSCPLL-INCR bezeichnete Signal ist geeignet erfindungsgemäß als zweites Digitalsignal übertragen zu werden.

In der Dekodiereinheit 7 des Farbdekoders 1 muß ferner die Schaltphase eines PAL- oder SECAM-Signals festgestellt werden, welche in der Fig. 1 mit SP bezeichnet ist.

Diese drei digitalen Signale liegen in dem Dekoder 1 also ohnehin vor und werden in paralleler Form der Umsetzungsanordnung 3 zugeführt, die diese Signale in eine serielle Folge in einem einzigen Signal umsetzt. Die drei Signale werden also zeitlich nacheinander in serieller Form als in der Fig. mit SD bezeichnetes Signal zu der zweiten Umsetungsanordnung 4 übertragen. Das Signal wird in dieser Umsetzungsanordnung 4 wieder in die drei Signale zerlegt und diese werden in ihre parallele Form umgesetzt und dem digitalen Farb-Enkoder 2 zugeführt. Der digitale Farb-Endkoder 2 erkennt anhand der Werte der Digitalsignale unmittelbar die Schwankungen der Taktfrequenz bzw. der Farbhilfsträgerfrequenz und kann diese bei der Enkodierung entsprechend berücksichtigen.

Dies ist insbesondere dann vorteilhaft, wenn das von dem Dekoder 1 dekodiert Farbsignal unmittelbar nachfolgend von dem Enkoder 2 wieder enkodiert wird. Während übriger Zeiten kann des dekodierte Signal beispielsweise einem Rechner zugeführt und dort verändert bzw. bearbeitet werden.

Anstelle der in Fig. 1 als Signalverarbeitungseinheit, d.h. also als Empfänger der in dem Signal übertragenen Digitalsignale, vorgesehenen Enkoders 2 können andere Funktionseinheiten vorgesehen sein, in denen das dekodierte Farb-Bildsignal weiterverarbeitet wird. Beispielsweise kann als Signalverarbeitungseinheit eine Ablenkeinheit eines Fernsehgerätes vorgesehen sein, welche Schwankungen der Taktfrequenzen benutzten kann, um Störungen in der Bilddarstellung bei stark schwankenden Taktfrequenzen zu vermeiden.

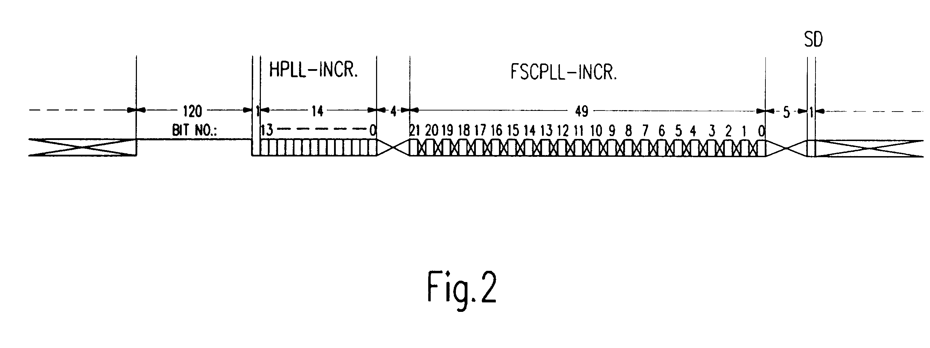

In Fig. 2 ist das in der Fig. 1 zwischen den beiden Umsetzungsanordnungen 3 und 4 übertragene serielle Signal für einen Beispielsfall näher dargestellt.

Da sich die Werte sowohl der Taktfrequenz, mit der das Digitalsignal im Dekoder verarbeitet wird, wie auch der Farb-Hilfsträgerfrequenz, mit der die Farbdekodierung im Dekoder stattfindet, sich pro Bildzeile des digitalen Bildsignals nur einmal ändern können, genügt es, je Bildzeile des Bildsignals die entsprechenden Werte dieser beiden Digitalsignale nur einmal zu übertragen.

Die Übertragung zwischen den beiden Übertragungseinheiten 3 und 4 gemäß Fig. 1 findet mit einem solchen Takt statt, daß die entsprechenden Werte mit genügender Bit-Breite übertragen werden können.

In der Darstellung gemäß Fig. 2 ist für die ersten 128 Takte das übertragene Signal SD auf High, d.h. also auf hohen Pegel gesetzt und nachfolgend für die Dauer eines Taktes auf Low, d.h. also auf niedrigen Pegel gesetzt. Diese Sequenz dient der Erkennung einer nachfolgenden Übertragung, d.h. also der Aufsynchronisation der Umsetzanordnung 4 gemäß der Darstellung in Fig. 1.

Nachfolgend wird entsprechend der Darstellung gemäß Fig. 2 beispielsweise das Digitalsignal HPLL-INCR übertragen, dessen 14 Bit seriell nacheinander übertragen werden. Nachfolgend sind vier Bits frei. Die nachfolgenden 49 Zeitschlitze werden zur Übertragung des Digitalsignals FCSPLL-INCR genutzt, das in der Darstellung gemäß Fig. 2 nur mit der halben Taktfrequenz übertragen wird, was für die Übertragung selbst bedeutet, daß jeder zweite Zeitschlitz nicht genutzt wird. Das Signal FSCPLL-INCR hat 22 Bits, die nacheinander seriell übertragen werden. Das Signal FSCPLL-INCR wird nur mit der halben Taktrate übertragen, da sowohl im digitalen Farbdekoder, wie auch in einer anderen Signalverarbeitungseinheit, der das Signal zugeführt wird, die Verarbeitung dieses zweiten Digitalsignals, das den Momentanwert der Farb-Hilfsträgerfrequenz angibt, ebenfalls im allgemeinen nur mit der halben Taktfrequenz gegenüber der Verarbeitung des ersten Digitalsignals erfolgt, das die verwendete Taktfrequenz angibt. Nach Übertragung des Signals FSCPLL-INCR sind gemäß der Darstellung in Fig. 2 fünf Bits nicht genutzt. Nachfolgend wird mit einem Bit-Breite die Schaltphase eines PAL- oder SECAM-Signals übertragen.

Nach dieser Übertragung tritt eine je nach Anwendung unterschiedlich lange Phase ein, in der in dem seriellen Signal keine Signale übertragen werden. Für die nächste Bildzeile des Bildsignals werden dann wieder neue Werte übertragen. Dies wird dann entsprechend dem Beispielsfalle gemäß Fig. 2 wiederum durch 128 Takte High und einen Takt Low des übertragenen Signals kenntlich gemacht.

Die in der Darstellung gemäß Fig. 2 gewählten Wortbreiten für die Signale HPLL-INCR und FSCPLL-INCR sind selbstverständlich von der konkreten Anwendung abhängig und können je nach gewünschter Genauigkeit gewählt werden.

## Patentansprüche

1. Verfahren zur Übertragung von Daten von einem digitalen Farbdekoder (1), welcher ein digitales Farb-Bildsignal dekodiert, zu einer anderen Signalverarbeitungseinheit (2),
dadurch gekennzeichnet, daß wenigstens ein erstes und ein zweites Digitalsignal von dem Dekoder (1) zu der Signalverarbeitungseinheit (2), in welcher das von dem Dekoder gelieferte dekodierte Farbbildsignal weiterverarbeitet wird, in einem Signal seriell übertragen werden, daß es sich bei dem ersten Digitalsignal um ein Inkrement-Signal handelt, das in einer in dem Farb-Dekoder (1) vorgesehenen Horizontalfrequenz-Phasenregelschleife (5) einem digitalen steuerbaren Oszillator zugeführt wird, welche ein von der Horizontalfrequenz des digitalen Farb-Bildsignals abhängiges Taktsignal liefert, mit dem das digitale Farbbildsignal in dem Dekoder (1) verarbeitet wird, daß es sich bei dem zweiten übertragenen Digitalsignal um ein Farbträger-Inkrement-Signal handelt, das in einer in dem Farb-Dekoder (1) vorgesehenen Farbträger-Phasenregelschleife (6) einem digitalen steuerbaren Oszillator zugeführt wird, welche eine Farb-Hilfsträgerfrequenz liefert, die zur Farb-Dekodierung des digitalen Farbbildsignals eingesetzt wird, und daß die Daten in dem seriellen Signal für jedes der zu übertragenen Digitalsignale je Bildzeile des digitalen Farb-Bildsignals einmal übertragen werden.

2. Verfahren nach Anspruch 1,
dadurch gekennzeichnet, daß als drittes Digitalsignal die PAL- oder SECAM-Schaltphase übertragen wird.

3. Verfahren nach einem der Ansprüche 1 oder 2,
dadurch gekennzeichnet, daß die Signalverarbeitungseinheit (2), die die übertragenen Digitalsignale empfängt, ein digitaler Farb-Enkoder (2) ist, der das vom Dekoder gelieferte dekodierte Bildsignal wenigstens zeitweise wieder codiert.

4. Verfahren nach einem der Ansprüche 1 bis 3,
dadurch gekennzeichnet, daß die Signalverarbeitungseinheit (2) ein Ablenkprozessor eines Bild-Darstellungsgerätes ist.

5. Verfahren nach einem der Ansprüche 1 bis 3,
dadurch gekennzeichnet, daß jeder Wert des ersten Digitalsignals mit einer Wortbreite von wenigstens 14 Bit übertragen wird.

6. Verfahren nach einem der Ansprüche 1 bis 5,
dadurch gekennzeichnet, daß jeder Wert des zweiten Digitalsignals mit einer Wortbreite von wenigstens 20 Bit übertragen wird und daß die Werte des zweiten Digitalsignals gegenüber den Werten des ersten Digitalsignals mit der halben Taktfrequenz übertragen werden.

7. Anordnung zur Übertragung von Daten von einem digitalen Farbdekoder (1), welcher ein digitales Farb-Bildsignal dekodiert, zu einer anderen Signalverarbeitungseinheit (2),
bestehend aus
einem digitalen Farbdekoder (1), in dem ein erstes Digitalsignal erzeugt wird, bei dem es sich um ein Inkrement-Signal handelt, das in einer in dem Farb-Dekoder (1) vorgesehenen Horizontalfrequenz-Phasenregelschleife (5) einem digitalen steuerbaren Oszillator zugeführt wird, welche ein von der Horizontalfrequenz des digitalen Farb-Bildsignals abhängiges Taktsignal liefert, mit dem das digitale Farbbildsignal in dem Farb-Dekoder (1) verarbeitet wird, und in dem ein zweites Digitalsignal erzeugt wird, bei dem es sich bei dem zweiten übertragenen Digitalsignal um ein Farbträger-Inkrement-Signal handelt, das in einer in dem Farb-Dekoder (1) vorgesehenen Farbträger-Phasenregelschleife (6) einem digitalen steuerbaren Oszillator zugeführt wird, welche eine Farb-Hilfsträgerfrequenz liefert, die zur Farb-Dekodierung des digitalen Farbbildsignals eingesetzt wird;
einer Umsetzanordnung (3) welcher die in dem Dekoder (1) in paralleler Form vorliegenden, zu übertragenden ersten und zweiten Digitalsignale zugeführt werden, und welche die Digitalsignale in serielle Form umsetzt; und
einer weiteren Umsetzungsanordnung (4), die die seriell empfangenen Daten in parallele Daten umsetzt, die der Signalverarbeitungseinheit (2) zugeführt werden, wobei die Daten zwischen den Umsetzanordnungen (3,4) je Bildzeile des digitalen Farb-Bildsignals einmal übertragen werden.

## Claims

1. A method of transmitting data from a digital color decoder (1), which decodes a digital color picture signal, to another signal processing unit (2), characterized in that at least a first and a second digital signal are serially transmitted in one signal from the decoder (1) to the signal processing unit (2), in which the decoded color picture signal supplied by the decoder is further processed, the first digital signal being an increment signal which is applied to a digital controllable oscillator in a horizontal frequency phase-locked loop (5) arranged in the color decoder (1), which supplies a clock signal dependent on the horizontal frequency of the digital color picture signal and with which the digital color picture signal is processed in the decoder (1), the second transmitted digital signal being a chrominance subcarrier increment signal which is applied to a digital controllable oscillator in a chrominance subcarrier phase-locked loop (6) arranged in the color decoder (1), which supplies a chrominance subcarrier frequency used for color decoding of the digital color picture signal, and in that, for each digital signal to be transmitted, the data in the serial signal are transmitted once per picture line of the digital color picture signal.

2. A method as claimed in claim 1, characterized in that the PAL or SECAM switching phase is transmitted as a third digital signal.

3. A method as claimed in claim 1 or 2, characterized in that the signal processing unit (2) receiving the transmitted digital signals is a digital color coder (2) which at least temporarily recodes the decoded picture signal supplied by the decoder.

4. A method as claimed in any one of claims 1 to 3, characterized in that the signal processing unit (2) is a deflection processor of a picture display device.

5. A method as claimed in any one of claims 1 to 3, characterized in that each value of the first digital signal is transmitted with a word width of at least 14 bits.

6. A method as claimed in any one of claims 1 to 5, characterized in that each value of the second digital signal is transmitted with a word width of at least 20 bits and in that the values of the second digital signal, as compared with the values of the first digital signal, are transmitted at half the clock frequency.

7. An arrangement for transmitting data from a digital color decoder (1), which decodes a digital color picture signal, to another signal processing unit (2), comprising
a digital color decoder (1) in which a first digital signal is generated, which is an increment signal applied to a digital controllable oscillator in a horizontal frequency phase-locked loop (5) arranged in the color decoder (1), which supplies a clock signal which is dependent on the horizontal frequency of the digital color picture signal and with which the digital color picture signal is processed in the color decoder (1), and a second digital signal is generated, which is a chrominance subcarrier increment signal applied to a digital controllable oscillator in a chrominance subcarrier phase-locked loop (6) arranged in the color decoder (1), which supplies a chrominance subcarrier frequency used for color decoding of the digital color picture signal;
a converter arrangement (3) receiving the first and second digital signals to be transmitted and present in a parallel form in the decoder (1) and converting the digital signals into a serial form; and
a further converter arrangement (4) converting the serially received data into parallel data which are applied to the signal processing unit (2), the data between the converter arrangements (3,4) being transmitted once per picture line of the digital color picture signal.

## Revendications

1. Procédé de transmission de données d'un décodeur de couleur numérique (1) qui décode un signal d'image couleur numérique vers une autre unité (2) de traitement de signal,
caractérisé en ce qu'au moins des premier et deuxième signaux numériques sont transmis en un signal en série par le décodeur (1) vers l'unité de traitement de signal (2) dans laquelle le signal d'image couleur décodé délivré par le décodeur est traité, que le premier signal numérique est un signal incrémentiel qui est amené dans une boucle de régulation de phase (5) à fréquence horizontale prévue dans le décodeur de couleur (1) à un oscillateur commandable numériquement qui délivre un signal de rythme dépendant de la fréquence horizontale du signal d'image couleur numérique avec lequel le signal d'image couleur numérique est traité dans le décodeur (1), que le deuxième signal numérique transmis est un signal incrémentiel à porteuse couleur qui est amené dans une boucle de régulation de phase de porteuse couleur (6) prévue dans le décodeur de couleur (1) à un oscillateur commandable numériquement qui délivre une fréquence de sous-porteuse couleur utilisée pour le décodage couleur du signal d'image couleur numérique et en ce que les données sont transmises dans le signal en série pour chacun des signaux numériques à transmettre par ligne d'image du signal d'image couleur numérique.

2. Procédé selon la revendication 1, caractérisé en ce que la phase de commutation PAL ou SECAM est transmise comme troisième signal numérique.

3. Procédé selon l'une des revendications 1 ou 2, caractérisé en ce que l'unité de traitement du signal (2) qui reçoit les signaux numériques transmis est un codeur couleur numérique (2) qui code à nouveau, du moins temporairement, le signal d'image décodé délivré par le décodeur.

4. Procédé selon l'une des revendications 1 à 3, caractérisé en ce que l'unité de traitement du signal (2) est un processeur de balayage d'un dispositif de représentation de l'image.

5. Procédé selon l'une des revendications 1 à 3, caractérisé en ce que chaque valeur du premier signal numérique est transmise avec une largeur de mots d'au moins 14 bits.

6. Procédé selon l'une des revendications 1 à 5, caractérisé en ce que chaque valeur du deuxième signal numérique est transmise avec une largeur de mots d'au moins 20 bits et que les valeurs du deuxième signal numérique sont transmises par rapport aux valeurs du premier signal numérique avec la moitié de la fréquence de rythme.

7. Dispositif de transmission de données par un décodeur de couleur numérique (1) qui décode un signal d'image couleur numérique vers une autre unité de traitement du signal (2) composé :
d'un décodeur de couleur numérique (1) dans lequel est produit un premier signal numérique, celui-ci étant un signal incrémentiel qui est amené dans une boucle de régulation de phase (5) à fréquence horizontale prévue dans le décodeur de couleur (1) à un oscillateur commandable numériquement qui délivre un signal de rythme dépendant de la fréquence horizontale du signal d'image couleur numérique avec lequel le signal d'image couleur numérique est traité dans le décodeur de couleur (1) et dans lequel un deuxième signal numérique est produit, le deuxième signal numérique transmis étant un signal incrémentiel à porteuse couleur qui est amené dans une boucle de régulation de phase de porteuse couleur (6) prévue dans le décodeur de couleur (1) à un oscillateur commandable numérique qui produit une fréquence de sous-porteuse couleur qui est utilisée pour le décodage couleur du signal d'image couleur numérique,
d'un dispositif de conversion (3) auquel sont amenés les premier et deuxième signaux numériques à transmettre, présents dans le décodeur (1) sous forme parallèle et qui convertit les signaux numériques sous forme série; et
d'un autre dispositif de conversion (4) qui convertit les données reçues sous forme série en données parallèles amenées à l'unité de traitement du signal (2), où les données entre les dispositifs de conversion (3, 4) sont transmises en une fois par ligne d'image du signal d'image couleur numérique.
